# EUROPÄISCHE PATENTSCHRIFT

(11) **EP 1 158 471 B1**
(45) Veröffentlichungstag und Bekanntmachung des Hinweises auf die Patenterteilung: **17.11.2004**
(21) Anmeldenummer: 00890170.4
(22) Anmeldetag: 26.05.2000
(51) Int. Cl.: G07F 19/00, G07F 17/16, H04M 15/00

(54) **System, Verfahren und Programm zur Zahlung in einem Telekommunikationsnetz**
System, method and program for payment in a telecommunication network
Système, méthode et programme pour le paiement dans un réseau de télécommunication

(43) Veröffentlichungstag der Anmeldung: 28.11.2001
(73) Patentinhaber: Höffle, Christian, 1100 Wien (AT); Walter, Michael, Ing., 1010 Wien (AT); Foidl, Horst, Dipl.-Ing., 2540 Bad Vöslau (AT)
(72) Erfinder: Höffle, Christian, 1100 Wien (AT); Walter, Michael, Ing., 1010 Wien (AT); Foidl, Horst, Dipl.-Ing., 2540 Bad Vöslau (AT)
(74) Vertreter: Weiser, Andreas, Dipl.-Ing.

(56) Entgegenhaltungen:
- EP-A- 0 765 068
- EP-A- 0 848 361
- WO-A-97/01920
- WO-A-98/30013
- WO-A-99/08242
- WO-A-99/22507
- WO-A-99/30293
- WO-A-99/56254
- WO-A-99/62036
- US-A- 5 930 777

## Beschreibung

### Hintergrund der Erfindung

Die vorliegende Erfindung betrifft ein Computersystem zur Übertragung von Finanzwerten von Benutzern zu Empfängern in einem Datennetz, welche Benutzer auch Zugang zu einem Telephonnetz haben, das von den Benutzern Gebühren für Telephonanrufe einhebt.

Die Erfindung betrifft ferner ein Verfahren zur Ausgabe von elektronischen Tickets und ein Computerprogramm zur Implementierung des vorgenannten Verfahrens.

Es besteht ein ungebremster Bedarf für Zahlungssysteme in Datennetzen, insbesondere dem Internet, die aufgrund ihrer einfachen Handhabung hohe Benutzerakzeptanz erreichen und dennoch die Anforderungen an Sicherheit und Funktionsfähigkeit erfüllen. Eine Art von bekannten Systemen arbeitet mit elektronischen Zertifikaten und Verschlüsselungen, die kompliziert in der Anwendung sind und die Registrierung des Benutzers bei Zertifizierungsstellen erfordern. Aus der US 5 737 414 ist eine andere Art von Systemen bekannt, bei welchen der Benutzer einen speziellen Telephonnetz-Einwahlknoten zum Datennetz wählt, welcher Finanzwerttransaktionen im Datennetz direkt dem Telephongebührenkonto des Benutzers belastet. Der Benutzer kann daher nur bestimmte Einwahlknoten verwenden, was die Einsatzmöglichkeit des Systems beschränkt.

Aus der EP 0 765 068 A2 ist ein Computersystem zur Übertragung von Finanzwerten von Benutzern zu Empfängern in einem Datennetz bekannt, wobei die Benutzer auch Zugang zu einem Telephonnetz haben, das von den Benutzern Gebühren für Telephonanrufe einhebt. In einer ersten Ausführungsform des bekannten Systems wählt der Benutzer zunächst eine vergebührende Telephonnummer (900-Nummer) des Empfängers, wobei der Empfänger als Anruferidentifikation die Telephonnummer des Benutzers erhält. Anschließend greift der Benutzer im Datennetz auf ein kostenpflichtiges Informationsangebot des Empfängers zu und gibt dabei seine Telephonnummer an. Der Empfänger kann durch Vergleich der angegebenen Telephonnummer mit der zuvor erhaltenen Telephonnummer die Vergebührung verifizieren und die Information freigeben. In einer alternativen Ausführungsform greift der Benutzer zuerst im Datennetz auf den kostenpflichtigen Empfänger zu und dieser gibt ihm eine Sitzungskennung bekannt. Der Benutzer wählt nun eine vergebührende Telephonnummer (900-Nummer) des Empfängers und gibt im Zuge der Telephonverbindung die Sitzungskennung auf seinem Tastwahltelephon ein. Der Empfänger hat nun die Bestätigung, daß der Zugriff vergebührt wird, und gibt die Information frei. Beide Lösungen haben den Nachteil, daß die Identität des Benutzers feststehen muß, denn die Vergebührung erfolgt durch Aufbauen oder Absetzen eines Telephonanrufes unter Angabe der Telephonnummer des Benutzers. Eine anonyme Zahlungsweise ist damit unmöglich. Darüberhinaus muß der Benutzer gleichzeitigen oder zumindest unmittelbar anschließenden Zugriff auf das Datennetz und das Telephonnetz haben.

### Zusammenfassung der Erfindung

Die Erfindung setzt sich zum Ziel, Systeme und Verfahren der eingangs genannten Art zu schaffen, welche einfacher sind als die bekannten, welche keine besonderen Vorrichtungen oder Computerprogramme auf Seiten des Benutzers erfordern und welche Anonymität des Benutzers beim Zahlungsvorgang ermöglichen.

In einem ersten Aspekt schafft die Erfindung dazu ein Computersystem zur Übertragung von Finanzwerten von Benutzern zu Empfängern in einem Datennetz, welche Benutzer auch Zugang zu einem Telephonnetz haben, das von den Benutzern Gebühren für Telephonanrufe einhebt, das sich auszeichnet durch die Kombination aus:
einer Datenbank zum Speichern elektronischer Tickets,
   - wobei jedes Ticket zumindest eine Ticketidentifikation enthält, die für jedes Ticket in der Datenbank einzigartig ist und einen Finanzwert darstellt;
einer Anrufbeantwortungseinheit, die an die Datenbank angeschlossen ist, zum Anschluß an das Telephonnetz ausgebildet ist und eine Sprachausgabeeinheit enthält und
   - einen über das Telephonnetz empfangenen Telephonanruf eines Benutzers beantwortet,
   - in Zusammenwirken mit der Datenbank ein neues elektronisches Ticket ermittelt und
   - mit Hilfe der Sprachausgabeeinheit zumindest die Tikketidentifikation dieses elektronischen Tickets an den Benutzer sprachausgibt; und
einem Serverrechner, der an die Datenbank angeschlossen und zum Anschluß an das Datennetz ausgebildet ist, welcher Serverrechner
   - eine Finanzwertübertragungsanforderung über das Datennetz empfängt, die zumindest eine Ticketidentifikation eines der genannten elektronischen Tickets und eine Empfängeridentifikation eines der genannten Empfänger umfaßt,
   - das durch die Ticketidentifikation referenzierte Tikket in der Datenbank aufsucht und
   - eine Eigentümerbeziehung zwischen zumindest einem Teil des genannten Tickets und dem durch die Empfängeridentifikation referenzierten Empfänger in der Datenbank errichtet;
wobei der Finanzwert eines neuen elektronischen Tickets von einer Schätzung der für den Telephonanruf vom Telephonnetz eingehobenen Gebühr abhängt.

Auf diese Weise wird eine völlig neue Art von Zahlungssystem geschaffen. Das System beruht auf einer elektronischen Währung in der Form von elektronischen Tickets, die einerseits vorbezahlt sind ("prepaid"), andererseits einen anonymisierten Finanzwert darstellen können, da die Datenbank bevorzugt keine Anruferidentifikation (wie sie in modernen Telephonetzen an sich zur Verfügung steht) zu den elektronischen Tickets speichert.

Wenn das Telephonnetz eine verbindungszeitabhängige Gebühr einhebt, führt bevorzugt die Anrufsbeantwortungseinheit die genannte Schätzung anhand einer Messung der Dauer des Telephonanrufes durch. In diesem Fall ist es besonders günstig, wenn gemäß einen weiteren Merkmal der Erfindung die Anrufbeantwortungseinheit den von der Dauer des Telephonanrufes abhängigen Finanzwert fortlaufend sprachausgibt.

Wenn das Telephonnetz eine Pauschalgebühr pro getätigtem Anruf einhebt ("pay per call"), kann die Anrufbeantwortungseinheit gemäß der Erfindung die genannte Schätzung auch anhand einer Erkennung der vom Benutzer für den Telephonanruf gewählten Rufnummer durchführen. So können dem Benutzer mehrere verschiedene Rufnummern angeboten werden, die Tickets mit unterschiedlichen Werten ausgeben.

In einigen Telephonnetzen besteht auch die Möglichkeit, daß der angerufene Teilnehmer die Gebühr für das Gespräch festlegt ("charge on demand"). Eine bevorzugte Ausführungsform der Erfindung besteht in diesem Fall darin, daß die Anrufbeantwortungseinheit den Finanzwert eines neuen elektronischen Tickets festlegt und einen Auftrag zur Einhebung einer von diesem Finanzwert abhängigen Gebühr an das Telehonnetz sendet.

Gemäß einem weiteren Merkmal der Erfindung besitzen die elektronischen Tickets eine zeitlich begrenzte Gültigkeit. Zu diesem Zweck wird vorgesehen, daß das elektronische Ticket eine Angabe über die ungefähre Uhrzeit seiner Sprachausgabe an den Benutzer enthält. Dadurch ist es möglich, bei der Einlösung des Tickets das Alter des Tickets zu überprüfen, oder generell abgelaufene Tickets in der Datenbank zu löschen oder für ungültig zu erklären. Besonders zweckmäßig ist es, eine Ticketlebensdauer von weniger als 24 Stunden vorzusehen, z.B. acht Stunden, sodaß die vorübergehende Aufbewahrung der elektronischen Tickets nicht unter Bankengesetze, Depotgesetze od.dgl. fällt.

Auch ist es wünschenswert, den Finanzwert eines elektronischen Tickets auf einen geringen Wert zu begrenzen, um das Risiko für den Benutzer gegen Manipulationen Dritter, z.B. Abhören des Telephonnetzes, zu begrenzen. Bei Telephonnetzen, die zeitabhängig vergebühren, ist es daher besonders günstig, wenn die Anrufbeantwortungseinheit den Telephonanruf nach Ablauf einer vorgegebenen Zeitspanne beendet. Diese Maßnahme ist auch generell nützlich, um "vergessene" Verbindungen zu beenden.

Die Sicherheit des erfindungsgemäßen Computersystems wird gesteigert, wenn gemäß einem weiteren Merkmal der Erfindung die Anrufbeantwortungseinheit einen vom Benutzer während des Telephonanrufes eingegebenen PIN-Code entgegennimmt und dem elektronischen Ticket in der Datenbank zuordnet. Die ein elektronisches Ticket einlösenden Stellen können dadurch vorsehen, daß nur bei Eingabe des richtigen PIN-Codes das Ticket akzeptiert wird. Insbesondere kann dadurch vorgesehen werden, daß der Serverrechner die genannte Eigentümerbeziehung nur nach Empfang und Validierung des diesem Ticket zugeordneten PIN-Codes errichtet.

Das erfindungsgemäße Computersystem kann mit jeder Art von Telephonnetz betrieben werden, das Gebühren für getätigte Anrufe einhebt. Vollkommene Anonymität des Anrufers ist beispielsweise gewährleistet, wenn der Anruf von einem Münzfernsprecher aus getätigt wird.

Besonders günstig ist es, wenn die vom Benutzer für den Telephonanruf gewählte Rufnummer eine Mehrwertdienstnummer (sog. "900-Nummer") ist, deren Abrechnungssystem einen Aufschlag auf die normale Gesprächsgebühr verrechnet, welcher zur Festlegung des Finanzwerts des elektronischen Tickets herangezogen werden kann.

Das erfindungsgemäße Computersystem eignet sich insbesondere zur Bezahlung im Internet, d.h. das genannte Datennetz ist bevorzugt das Internet. In diesem Fall empfängt der Serverrechner bevorzugt zusammen mit der Finanzwertübertragungsanforderung eine Ziel-URL und verweist nach Errichtung der Eigentümerbeziehung den Benutzer an diese. Mit diesem Mechanismus kann der Zugriff zu den Zieldaten an der Ziel-URL mittels der genannten elektronischen Tickets vergebührt werden.

Eine mögliche Variante zur Verhinderung von Mißbräuchen kann dabei darin bestehen, daß der Serverrechner nach Errichtung der Eigentümerbeziehung eine Rückfrage über die erfolgreiche Errichtung erwartet, prüft und bestätigt.

In einem Teilaspekt schafft die Erfindung ein Verfahren zur Ausgabe von elektronischen Tickets, die Finanzwerte darstellen, an Benutzer, welche Zugang zu einem Telephonnetz haben, das von den Benutzern Gebühren für Telephonanrufe einhebt, mit den Schritten:

Vorsehen einer Datenbank zum Speichern elektronischer Tickets, wobei jedes Ticket zumindest eine Ticketidentifikation enthält, die für jedes Ticket in der Datenbank einzigartig ist,

Anschließen einer Anrufbeantwortungseinheit, die eine Sprachausgabeeinheit enthält, an die Datenbank und an das Telephonnetz,

Entgegennehmen eines Telephonanrufes eines Benutzers durch die Anruferbeantwortungseinheit,

Ermitteln, in Zusammenwirken mit der Datenbank, eines neuen elektronischen Tickets,

Sprachausgeben zumindest der Ticketidentifikation dieses elektronischen Tickets an den Benutzer mit Hilfe der Sprachausgabeeinheit,
wobei der Finanzwert eines neuen elektronischen Tickets anhand einer Schätzung der für den Telephonanruf vom Telephonnetz eingehobenen Gebühr festgelegt wird.

Bevorzugt wird die genannte Schätzung anhand einer Messung der Dauer des Telephonanrufes durchgeführt. In diesem Fall ist es besonders günstig, wenn die Anrufbeantwortungseinheit den von der Dauer des Telephonanrufes abhängigen Finanzwert fortlaufend sprachausgibt. Ein letzter Aspekt der Erfindung besteht schließlich in der Schaffung eines Computerprogrammproduktes für ein Computersystem, das des genannte Verfahren implementiert.

### Kurze Beschreibung der Zeichnungen

Die Erfindung wird nachstehend anhand einer Beschreibung besonders bevorzugter Ausführungsformen näher erläutert, welche auf die begleitenden Zeichnungen bezug nimmt, in denen:
Fig. 1a ein Blockschaltbild des erfindungsgemäßen Computersystems und Fig. 1b ein Diagramm der Geldflüsse zwischen den Komponenten von Fig. 1a zeigt;
Fig. 2 den schematischen Aufbau eines elektronischen Tickets zeigt;
Fig. 3 ein Ablaufskript einer bevorzugten Ausführungsform des erfindungsgemäßen Verfahrens in Form eines Sequenzdiagrammes zeigt;
die Fig. 4 und 5 zwei Bildschirmdarstellungen von auf dem Benutzerrechner ablaufenden Applikationen wiedergeben;
Fig. 6 eine Bildschirmdarstellung der Schnittstelle des Computersystems für einen Contentprovider im Internet zeigt, um seine Empfängeridentifikation im Computersystem einzurichten; und
Fig. 7 ein Ablaufskript einer Variante des erfindungsgemäßen Verfahrens in Form eines Sequenzdiagrammes zeigt.

### Ausführliche Beschreibung bevorzugter Ausführungsformen

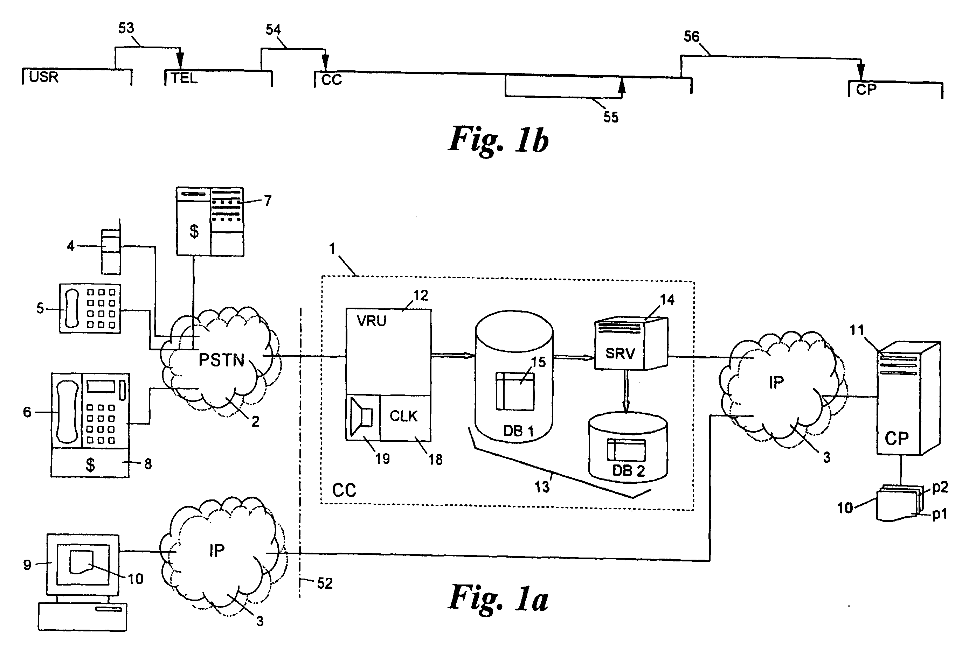

Es wird auf die Fig. 1a und 1b gemeinsam Bezug genommen. In Fig. 1a ist ein Computersystem 1 gezeigt, welches im Einflußbereich eines Verrechnungszentrums (clearing center, CC) steht. Das Computersystem 1 ist einerseits an ein öffentliches Telephonnetz 2 und andererseits an ein Datennetz 3, im gezeigten Fall das Internet (IP), angeschlossen. Der Einflußbereich eines stellvertretenden Betreibers des Telephonnetzes 2 ist in Fig. 1b mit TEL bezeichnet.

Benutzer können sich in das öffentliche Telephonnetz 2 über eine Vielzahl verschiedener Endgeräte einwählen, von denen drei stellvertretend dargestellt sind: ein Mobiltelephon 4, ein Festnetztelephon 5 und ein öffentlicher Münzfernsprecher 6. Es versteht sich, daß auch alle andere bekannten Arten von Telephonnetz-Endgeräten möglich sind, z.B. Computermodems, Schnurlostelephone, Autotelephone, Callcenter usw. Der Einflußbereich eines stellvertretenden Benutzers ist in Fig. 1b über den Endgeräten 4, 5 und 6 angedeutet und mit USR bezeichnet.

Das Telephonnetz 2 hebt - wie hinlänglich bekannt - von einem über eines der Endgeräte 4, 5 anrufenden Benutzer Gebühren für einen solchen Telephonanruf ein, und zwar im Zusammenwirken mit einer Gebührenstelle 7 des Telephonnetzes 2, von der eine stellvertretend in Fig. 1a veranschaulicht ist. Die Gebührenstelle 7 versendet Rechnungen an den Benutzer USR oder belastet sein Bankkonto oder seine Kreditkarte usw.

Alternativ wird bei Verwendung des Münzfernsprechers 6 der Gebührenbetrag in bekannter Weise in Form von Münzen im Münzfernsprecher 6 in einem Münzsammelbehälter 8 gesammelt. Der Münzsammelbehälter 8 des Münzfernsprechers 6 steht in diesem Sinne im Einflußbereich des Betreibers TEL des Telephonnetzes 2.

Der Benutzer USR verfügt ferner über einen Benutzerrechner 9, welcher ebenfalls Verbindung zum Datennetz 3 hat. Im Falle des Internets läuft auf dem Benutzerrechner 9 ein Internetbrowser bekannter Art, z.B. Netscape (ein Warenzeichen der Netscape Inc.) oder Internet Explorer (ein Warenzeichen von Mircosoft Inc.). Der Benutzer USR fordert mit Hilfe seines Rechners 9 über das Internet 3 Internetseiten 10 von einem Contentprovider 11 im Internet an, empfängt diese und betrachtet sie auf dem Bildschirm seines Rechners 9.

Das Computersystem 1 schafft die Möglichkeit, derartige Datennetzzugriffe zu vergebühren. Zu diesem Zweck enthält das Computersystem 1 eine Anrufbeantwortungseinheit (voice response unit, VRU) 12, die mit einer Datenbank 13 in Verbindung steht, welche ihrerseits von einem Serverrechner 14 verwaltet wird, der mit dem Datennetz 3 Verbindung hat.

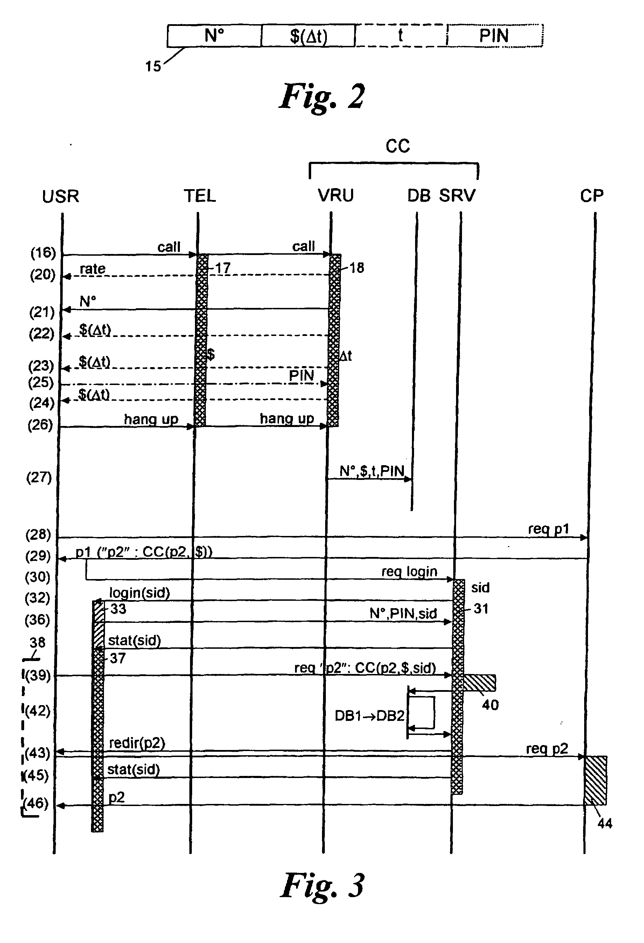

Die Datenbank 13 setzt sich im gezeigten Beispiel aus einem ersten Datenbankabschnitt DB1 und einem zweiten Datenbankabschnitt DB2 zusammen. Der erste Datenbankabschnitt DB1 dient zur Aufnahme einer Mehrzahl von "elektronischen Tickets" 15, von denen eines stellvertretend in Fig. 2 gezeigt ist. Es versteht sich, daß die elektronischen Tickets 15 tatsächlich Datensätze in der Datenbank 13 sind, deren Strukturierung und physischer Speicheraufbau vom Fachmann nach den Regeln der Datenbanktechnik entsprechend gewählt werden kann.

Gemäß Fig. 2 umfaßt jedes elektronische Ticket 15 zumindest eine Ticketidentifikation N°. Die übrigen Felder des elektronischen Tickets 15 sind optional und werden später erläutert.

Die Ticketidentifikation N° kann z.B. eine Nummer sein und ist für jedes elektronische Ticket 15 in der Datenbank 13, genauer im hier betrachteten Datenbankabschnitt DB1, eindeutig. Mit anderen Worten gibt es zu keinem Zeitpunkt zwei gültige elektronische Tickets 15 im Datenbankabschnitt DB1 mit derselben Ticketidentifikation.

Die Vergebührung eines Internetzugriffs vom Benutzerrechner 9 auf eine Internetseite 10 des Contentproviders 11 erfolgt in zwei Stufen. Zunächst wird ein elektronisches Ticket 15 an den Benutzer ausgegeben, welches dieser dann zur Bezahlung im Internet verwendet.

Die erste Stufe, die Ticketausgabe, wird nun unter zusätzlicher Bezugnahme auf die obere Hälfte des Sequenzdiagrammes von Fig. 3 näher erläutet.

Gemäß Fig. 3, obere Hälfte, wählt ein Benutzer USR mit Hilfe eines Endgerätes 4, 5 oder 6 über das Telephonnetz 2 (TEL) das Computersystem 1 an, genauer die Anrufbeantwortungseinheit 12 (VRU) (Schritt 16 in Fig. 3). Beim Aufbau der Verbindung wird im Telephonnetz 2 ein Gebührenzähler 17 gestartet. Etwa zur gleichen Zeit startet die Anrufsbeantwortungseinheit 12 einen Zeitmesser 18.

Die Anrufbeantwortungseinheit 12 enthält eine Sprachausgabeeinheit 19, mit welcher sie optional den Benutzer über die Gebührenrate für diesen Anruf informiert (Schritt 20). Dieser Schritt könnte entfallen oder vom Telephonnetz 2 selbst veranlaßt werden.

Die Anrufbeantwortungseinheit 12 ermittelt nun in Zusammenarbeit mit dem Datenbankabschnitt DB1 der Datenbank 13 ein neues elektronisches Ticket 15. Unter dem Begriff "neues elektronisches Ticket" wird ein elektronisches Ticket 15 verstanden, das noch nicht ausgegeben worden ist und noch nicht in einer Eigentümerbeziehung steht, weder ganz noch zu einem Teil, wie später noch erläutert wird. Ein solches neues Ticket besitzt eine einzigartige Ticketidentifikation N°, die sich von den Ticketidentifikationen aller übrigen elektronischen Tickets 15 im Datenbankabschnitt DB1 unterscheidet. Es ist dabei belanglos, ob der Datenbankabschnitt DB1 bereits einen Vorrat an neuen elektronischen Tickets 15 bereithält, oder ein solches erst generiert und dann im Datenbankabschnitt DB1 abgelegt wird.

Die Anrufbeantwortungseinheit 12 gibt die Ticketidentifikation N° des neuen elektronischen Tickets 15 an den anrufenden Benutzer USR aus (Schritt 21), gegebenenfalls ergänzt mit einer kurzen Erläuterung der Bedeutung der Ticketidentifikation. Die Ausgabe erfolgt in Sprache mit Hilfe der Sprachantworteinheit 19.

Bei der in Fig. 3 dargestellten Ausführungsform der Erfindung wird dem elektronischen Ticket 15 ein Finanzwert $ zugewiesen, der von der Dauer des Telephonanrufes abhängt, d.h. von der Zeitdauer der Aufrechterhaltung der Verbindung zwischen dem Benutzer USR und dem Computersystem 1. Diese Variante ist für Telephonnetze 2 (TEL) bestimmt, welche eine verbindungsdauerabhängige Gebühr vom Benützer einheben. Der Zeitmesser 18 läuft daher im wesentlichen proportional zum Gebührenzähler 17 des Telephonnetzes 2 und sein Wert stellt eine Schätzung der durch das Telephonnetz 2 vom Benutzer eingehobenen Gebühr dar. Je länger der Benutzer USR die Verbindung aufrechterhält, umso höher ist seine Telephongebühr und umso höher steigt der Wert des elektronischen Tickets 15. Das Warten des Benutzers am Ende der Telephonleitung entspricht daher einem kontinuierlichen "Aufwerten" des elektronischen Tickets 15. Es ist zweckmäßig, wenn der sich kontinuierlich erhöhende Wert $(Δt) des elektronischen Tickets 15 in periodischen Abständen an den Benutzer sprachausgegeben wird (Schritte 22, 23 und 24).

Die Anrufbeantwortungseinheit 12 kann den Benutzer USR optional zur Eingabe eines Paßwortcodes PIN auffordern und diesen entgegennehmen (Schritt 25). Der Zweck dieses PIN-Codes wird später noch erläutert. Der Code kann in einem gesprochenem Wort des Benutzers bestehen, welches gespeichert oder mittels bekannter Spracherkennungsverfahren ausgewertet wird, in einer Tastwahleingabe des Benutzers mit Hilfe von Mehrfrequenztönen od.dgl.

Zu jedem beliebigen Zeitpunkt kann der Benutzer USR auflegen, d.h. die Verbindung unterbrechen (Schritt 26). Damit wird der Gebührenzähler 17 im Telephonnetz 2 angehalten, und ebenso der Zeitmesser 18 in der Anrufbeantwortungseinheit 12. Die Anrufbeantwortungseinheit 12 verfügt nun mit der Zeitmessung Δt der Dauer des Telephonanrufes über eine ungefähre Schätzung der vom Telephonnetz 2 eingehobenen Gesprächsgebühr und damit über einen zuweisbaren Finanzwert für das elektronische Ticket 15.

Um das Risiko bei der Handhabung der elektronischen Tickets 15 zu begrenzen, kann der Finanzwert des elektronischen Tickets 15 begrenzt werden, beispielsweise indem die Anrufbeantwortungseinheit 12 nach Ablauf einer vorgegebenen Zeitspanne Δtₘₐₓ "auflegt", d.h. die Verbindung zum Benutzer beendet.

Die Anrufbeantwortungseinheit 12 speichert die sprachausgegebene Identifikation N° zusammen mit dem Finanzwert $ des elektronischen Tickets im Datenbankabschnitt DB1 der Datenbank 13 als gültiges Ticket (Schritt 27). Wenn der Datenbankabschnitt DB1 alternativ bereits einen Vorrat an neuen elektronischen Tickets 15 enthält, wird anstelle der Abspeicherung das entsprechende elektronische Ticket als "nicht mehr neu", d.h. als ausgegeben bzw. "gültig" markiert.

Wenn der Benutzer im Schritt 25 einen PIN-Code eingegeben hat, umfaßt das gespeicherte gültige elektronische Ticket 15 zusätzlich diesen PIN-Code (siehe Fig. 2). Optional kann dem elektronischen Ticket 15 ein Zeitstempel t über den ungefähren Zeitpunkt seiner Ausgabe hinzugefügt werden. Der Zeitstempel t kann in weiterer Folge dazu verwendet werden, elektronische Tickets 15 zwar nach Ablauf einer vorgegebenen Zeitspanne für ungültig zu erklären. Die vorgegebene Zeitspanne beträgt bevorzugt weniger als 24 Stunden, z.B. acht Stunden. Die Anrufbeantwortungseinheit 12 oder der Serverrechner 14 des Computersystems 1 durchkämmen den Datenbankabschnitt DB1 z.B. in periodischen Abständen nach abgelaufenen Tickets und beseitigen diese.

Die Ticketidentifikation N° kann ein Code, Wort oder einfach eine fortlaufende Nummer sein, sodaß das Hinzuziehen eines PIN-Codes ratsam ist, um Mißbräuche zu verhindern. Alternativ könnte die Ticketidentifikation durch Projektion in einen unüberschaubaren Zahlenraum verschlüsselt sein, wie bekannt, sodaß das "Erraten" einer gültigen Ticketidentifikation unwahrscheinlich ist. Im einfachsten Fall besteht ein elektronisches Ticket 15 ausschließlich aus der Ticketidentifikation N°.

Das beschriebene System der zeitabhängigen Aufwertung der elektronischen Tickets 15 eignet sich besonders in Verbindung mit der Verwendung von Mehrwertdienstnummern (sog. "900-Nummern"). Mehrwertdienstnummern stellen dem Anrufer eine überproporionale Telephongebühr in Rechnung und geben dem Telephonnetzbetreiber TEL so die Möglichkeit, den überproportionalen Anteil an den angerufenen Teilnehmer, das Verrechnungszentrum CC, als "Verbindungsprovision" abzuführen.

Bei Telephongebührensystemen, bei welchen der Anrufer lediglich mit einer Pauschalgebühr pro Anruf belastet wird (sog. "charge per call"), erübrigt sich eine zeitabhängige Aufwertung des Tickets. Jedem elektronischen Ticket 15 wird hier ein vorgegebener Finanzwert $ zugewiesen, welcher zu dem Gebührenanteil in Relation steht ist, den der Telephonnetzbetreiber an den angerufenen Teilnehmer abführt. In diesem Fall ist dem Benutzer USR die Pauschalgebühr für den Anruf einer bestimmten Telephonnummer bekannt, und es werden verschieden hoch vergebührende Telephonnummern zur Verfügung gestellt, die Tickets mit unterschiedlichen vorgegebenen Finanzwerten ausgeben. Die Anrufbeantwortungseinheit 12 des Computersystems 1 legt anhand einer Erkennung der Leitung, auf welcher ein Anruf einlangt, d.h. anhand einer Erkennung der vom Benutzer gewählte Telephonnummer, den Finanzwert $ des elektronischen Tickets 15 fest.

Die Verwendung unterschiedlicher Anwahlnummern ist selbstverständlich auch im Falle der zeitabhängigen Aufwertung denkbar, wobei die verschiedenen Telephonnummern für unterschiedliche Aufwertungsgeschwindigkeiten (z.B. 1 $/min, 50 $/min usw.) stehen.

In einigen Telephonnetzen ist es auch möglich, daß der angerufene Teilnehmer die Gebühr festlegt und dem Telephonnetz einen Auftrag zur Einhebung dieser Gebühr erteilt (sog. "charge on demand"). In diesem Fall legt die Anrufbeantwortungseinheit 12 den Finanzwert $ des elektronischen Tickets 15 selbst fest und gibt eine entsprechende Anweisung an die Verrechnungsstelle 7 des Telephonnetzes 2.

Alternativ ist es denkbar, daß der Benutzer USR in Zusammenarbeit mit der Anrufbeantwortungseinheit 12, beispielsweise durch entsprechende Tastwahleingaben, den gewünschten Finanzwert $ selbst festlegt.

Der weitere Einsatz des Computersystems 1 zur Übertragung des elektronischen Tickets 15 an einen Empfänger, hier den Contentprovider 11, wird unter zusätzlicher Bezugnahme auf die untere Hälfte des Sequenzdiagrammes von Fig. 3 erläutert.

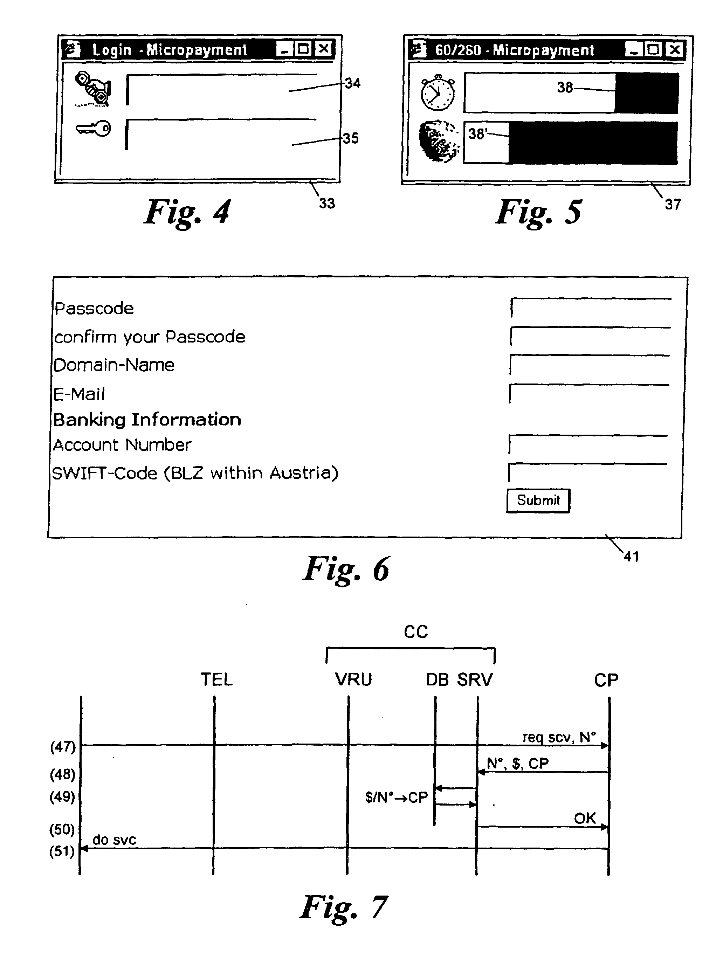

Vorausgeschickt sei, daß jedem Contentprovider im Datenbankabschnitt DB2 der Datenbank 13 ein Sammelkonto zum Sammeln elektronischer Tickets 15 zugeordnet ist. Zu diesem Zweck werden die Contentprovider im Computersystem 1 registriert. Die Registrierung erfolgt beispielsweise über eine Internetschnittstelle zum Datenbankabschnitt DB2, deren Eingabemaske 41 in Fig. 6 gezeigt ist.

Gemäß Fig. 3, untere Hälfte, fordert der Benutzer USR eine Internetseite p1 im http-Standard vom Contentprovider 11 (CP) an (Schritt 28). Die Seite p1 wird zum Benutzerrechner 9 gesendet (Schritt 29). In dem gezeigten Beispiel enthält die Seite p1 einen Internet-Link auf eine Seite p2, wobei der Zugriff auf die Seite p2 kostenpflichtig ist und mit Hilfe eines elektronischen Tickets 15 bezahlt werden soll. Unter dem Begriff "Internet-Link" wird in der vorliegenden Beschreibung ein anklickbares Objekt der Bildschirmanzeige des auf dem Benutzerrechner ablaufenden Internetbrowsers bezeichnet, welches den Ort von Daten an einer spezifizierten Internetadresse ("unified resource locator", URL) enthält, zu welcher "der Internetbrowser beim Anklicken verzweigt"; tatsächlich wird hierbei ein Request im Internet abgesetzt, die durch die URL referenzierten Daten an den Absender des Requests zurücksenden.

Zu dem Zwecke der Vergebührung wird der Internet-Link auf die Zielseite p2 in der Quellseite p1 durch einen indirekten Link ersetzt: Nach außen sichtbar für den Benutzer ist der Link zwar mit "p2" beschriftet, verweist jedoch tatsächlich auf die URL der Verrechnungsstelle CC des Computersystems 1, wobei die URL von p2 und die einzuhebende Gebühr $ als Parameter übergeben werden (siehe Schritt 29).

Die Quellseite p1 enthält ferner an ihrem Beginn einen automatischen Request an den Verrechnungsserver 14, auf dem Benutzerrechner 9 zusätzlich ein Login-Fenster zu eröffnen (Schritt 30).

Beim Empfang des Login-Requests startet der Verrechnungsserver 14 einen lokalen Prozeß 31, welcher durch eine Sitzungskennung (session id) sid gekennzeichnet ist, und sendet das Login-Fenster zusammen mit der Sitzungskennung sid an den Benutzerrechner 9. Am Benutzerrechner 9 wird das Login-Fenster von der Browsersoftware in einem Fensterprozeß 33 dargestellt. Ein Beispiel der Bildschirmdarstellung des Fensterprozesses 33 ist in Fig. 4 gezeigt.

Der Benutzer gibt nun die Ticketidentifikation N° in ein Feld 34 und optional den PIN-Code PIN in ein Feld 35 des Login-Fenster ein (Fig. 4). Der Fensterprozeß 33 sendet diese Information zusammen mit der Sitzungskennung sid an den Serverrechner 14 (Schritt 36). Der Serverrechner 14 kann diese Information anhand der Sitzungskennung sid dem entsprechenden Prozeß 31 zuweisen.

Der Prozeß 31 ermittelt optional den Status des elektronischen Tickets 15 aus dem Datenbankabschnitt DB1 und sendet den Status an den Benutzerrechner 9 in Form eines Statusfensters. Das Statusfenster wird vom Benutzerrechner 9 in einem Fensterprozeß 37 dargestellt. Ein Beispiel der Bildschirmdarstellung des Fensterprozesses 37 ist in Fig. 5 gezeigt. Ein erster Balken 38 zeigt die verbleibende Gültigkeitsdauer des elektronischen Tickets 15 an, ein zweiter Balken 38 den verbliebenen Finanzwert $ des elektronischen Tickets 15.

Das Statusfenster des Fensterprozesses 37 bleibt geöffnet, bis es der Benutzer schließt. Während der Fensterprozeß 37 (oder der Fensterprozeß 33, wenn kein Statusfenster vorgesehen ist) läuft und somit eine Sitzungskennung sid im Benutzerrechner 9 verfügbar ist, können mehrere Zahl- bzw. Vergebührungsvorgänge mit ein und demselben elektronischen Ticket 15 aufeinanderfolgend vorgenommen werden, von denen ein Vorgang 38 stellvertretend gezeigt ist und nun beschrieben wird.

Beim Vorgang 38 klickt der Benutzer den kostenpflichtigen, mit "p2" beschrifteten Link auf der Quellseite p1 an. Dadurch wird ein Request an die Verrechnungsserver-URL "CC" des Verrechnungsservers 14 abgesetzt (Schritt 39). Der Request umfaßt als Parameter die gewünschte Ziel-URL "p2", den dafür einzuhebenden Finanzwert $ und die Sitzungskennung sid.

Der Verrechnungsserver 14 ordnet diese Information anhand der Sitzungskennung sid dem entsprechenden Prozeß 31 zu. Der Prozeß 31 startet optional eine Sicherheitsüberprüfung 40. Die Sicherheitsüberprüfung 40 besteht z.B. in einer Überprüfung des Feldes "http-referer", welches vom ersten Webserver auf dem Weg des Requests dem Request hinzugefügt wird, wie in der Internettechnik bekannt. Das Feld "http-referer", des Requests enthält einen Verweis auf den Absenderserver der Seite p1 welche den angewendeten Link enthalten hatte, der Grundlage des Requests war: Wie ersichtlich, muß das der Contentprovider 11 sein, wenn der Ablauf korrekt eingehalten wurde.

Der von der Sicherheitsprüfung 40 akzeptierte Absenderserver ist daher gerade jener Server, auf dem die jeweiligen gewünschten Ziel-Daten (hier: Seite p2) liegen. Die Grundlagen für die Sicherheitsprüfung 40 werden daher durch die Registrierung der Contentprovider 11 im Computersystem 1 gelegt.

Nach erfolgreichem Passieren der Sicherheitüberprüfung 40 bucht der Prozeß 31 das durch die Ticketidentifikation N° referenzierte elektronische Ticket 15 vom Datenbankabschnitt DB1 auf das jeweilige Sammelkonto des Contentproviders 11 im Datenbankabschnitt DB2 um (Schritt 42). Wenn das elektronische Ticket 15 einen größeren Finanzwert hat als der umzubuchende Finanzwert $, wird nur ein entsprechender Teil des elektronischen Tickets 15 umgebucht, d.h. das elektronische Ticket wird "abgerissen" und der Abriß umgebucht.

Es versteht sich, daß die Datenbank 13 auch anders aufgeteilt sein kann als in einen Datenbankabschnitt DB1 und einen Datenbankabschnitt DB2. Beispielsweise genügt es, einen einzigen Datenbankabschnitt vorzusehen, in welchem der Serverrechner 14 lediglich Eigentümerbeziehungen zwischen bestimmten elektronischen Tickets 15 oder deren Teilen und bestimmten Empfängern errichtet. Entsprechende Referenzierungssysteme sind in der Datenbanktechnik bekannt. Auch eine weitergehende Aufgliederung der Datenbank 13 wäre möglich, beispielsweise durch Normalisierung der Daten der Contentprovider in einem Abschnitt mit Stammdaten und einen gesonderten Abschnitt mit den Sammelkonten. Die Datenbank 13 kann auch geographisch verteilt sein. Beispielsweise kann eine Version des Datenbankabschnittes DB1 zusammen mit der Anrufbeantwortungseinheit 12 an einem ersten Ort stehen, und eine zweite Version am Ort des Verrechnungsservers 14, welcher weit entfernt sein kann. Die beiden Versionen können durch in der Technik bekannte Datenspiegelungs- oder -aktualisierungsmechanismen kontinuierlich oder periodisch synchronisiert werden.

Nach erfolgreicher Umbuchung des elektronischen Tickets 15 bzw. Herstellung einer Eigentümerbeziehung sendet der Prozeß 31 einen "redirect"-Befehl nach dem http-Standard an den Benutzerrechner 9 mit dem Inhalt, letzteren auf die Zielseite p2 umzuleiten (Schritt 43, erster Teil) . Die Browsersoftware des Benutzerrechners 9 setzt einen entsprechenden Request an den Contentprovider 11 ab (Schritt 43, zweiter Teil).

Der Contentprovider 11 kann nun optional seinerseits eine Sicherheitsüberprüfung 44 durchführen, die analog zur Sicherheitsüberprüfung 40 abläuft. Die Sicherheitsüberprüfung 44 prüft wieder den Absenderverweis "http-referer", welcher vom ersten Webserver auf dem Weg des Requests diesem hinzugefügt worden ist. Bei ordnungsgemäßem Ablauf des Vorganges 38 muß der Absenderverweis auf den Verrechnungsserver 14 des Verrechnungszentrums CC zeigen. Trifft dies zu, sendet der Contentprovider 11 die gewünschte Seite p2 an den Benutzer USR (Schritt 46).

Der Prozeß 31 aktualisiert ferner das Statusfenster des Fensterprozesses 37 auf dem Benutzerrechner 9 (Schritt 45) und zeigt den nun entsprechend verminderten Wert des elektronischen Tickets 15 an.

Das geschilderte Verfahren erübrigt es, die Ticketidentifikation des elektronischen Tickets 15 dem Contentprovider 11 bekanntzugeben. Es erfordert nur geringe Rechenleistung auf Seiten des Contentproviders; wenn auf die Sicherheitsüberprüfung 44 verzichtet wird, laufen keine Tasks auf dem Interserver des Contentproviders.

Wenn auf dem Internetserver des Contentproviders keine Tasks laufen sollen, jedoch dennoch erhöhte Sicherheit bereitgestellt werden soll, besteht eine alternative Variante des in der unteren Hälfte von Fig. 3 dargestellten Verfahrens darin (nicht dargestellt), die Schritte 28 bis 42 wie beschrieben auszuführen, jedoch anschließend anstelle der Schritte 43 bis 46 wie folgt vorzugehen: Der Prozeß 31 fordert selbst die Seite p2 vom Contentprovider (CP) 11 an, nimmt diese entgegen und sendet sie an den Benutzer USR zurück. Dadurch ist es möglich, die Ziel-URL "p2" von Beginn an zu verschlüsseln, d.h. in die Seite p1, genauer den Internet-Link "p2" (Schritt 29), verschlüsselt zu integrieren. Dem Benutzer USR ist dadurch die tatsächliche Ziel-URL "p2" nicht bekannt. Die Entschlüsselung nimmt der Prozeß 31 auf dem Serverrechner 14 vor. Die Ver- und Entschlüsselung kann im einfachsten Fall in einer bloßen Zuordnungstabelle zwischen den tatsächlichen Ziel-URLs "p2" und zufällig gewählten Ziel-Identifikationen bestehen, welch letztere dem Internet-Link des Schrittes 29 zugefügt werden. Diese Variante hat den Vorteil einer hohen Sicherheit und erfordert geringe Rechenleistung auf Seiten des Contentproviders, jedoch um den Preis eines erhöhten Netzwerkverkehrs und einer erhöhten Rechenleistung auf Seiten des Serverrechners 14.

Fig. 7 zeigt eine weitere Variante des Verfahrens der unteren Hälfte von Fig. 3. Das elektronische Ticket 15 wird hier im Zuge einer Serviceanforderung vom Benutzer USR an den Contentprovider 11 gesandt (Schritt 47). Der Contentprovider schickt einen Verrechnungsauftrag an den Verrechnungsserver 14, umfassend die Ticketidentifikation N°, den gewünschten Betrag $ und seine eigene Identifikation CP (Schritt 48). Der Verrechnungsserver 14 errichtet eine Eigentümerbeziehung zwischen dem gewünschten $-Anteil des elektronischen Tickets 15 mit der Ticketidentifikation N° und dem Contentprovider 11 (Schritt 49) und bestätigt die erfolgreiche Durchführung (Schritt 50). Der Contentprovider 11 wartet auf diese Bestätigung und führt den gewünschten Dienst aus (Schritt 51).

Fig. 1b zeigt die Geldströme, welche dem System zugrunde liegen. Im Zuge der Telephonrechnung (bei einem Münzfernsprecher 6: durch Münzeinwurf) wird Geld vom Benutzer USR zum Telekommunikationsunternehmer TEL übertragen (Pfeil 53). Das Telekommunikationsunternehmen TEL überweist in regelmäßigen Abständen einen Anteil der Gespächsgebühren an das Verrechnungszentrum CC (Pfeil 54). Im Verrechnungszentrum CC erfolgt eine Umbuchung auf die Konten der Contentprovider (Pfeil 55). In regelmäßigen Abständen überweist das Verrechnungszentrum CC den Kontoständen der Contentprovider entsprechende Geldbeträge an die Contentprovider (Pfeil 56).

Es versteht sich, daß das vorgestellte Computersystem und die vorgestellten Verfahren nicht auf die Verwendung des Telephonnetzes und des Internets beschränkt sind. Anstelle des Datennetzes 3, in dem eine anonyme Zahlung bzw. Finanzwertübertragung vorzunehmen ist, kann jedes andere beliebige Telekommunikationsnetz verwendet werden, z.B. Telephonnetze, Kabelfernsehnetze, Funknetze usw. Beispielsweise kann die Ticketidentifikation N° des elektronischen Tickets 15 über das erste Telekommunikationsnetz 3 an den Empfänger auch einfach in Sprachform durchgegeben werden.

Anstelle des Telephonnetzes 2, welches zur Gebühreneinhebung verwendet wird, kann ebenfalls jedes beliebige Telekommunikationsnetz verwendet werden. Tatsächlich sind verschiedene Telekommunikationsnetze vorstellbar, die Gebühren einheben, z.B. vergebührende Datennetze, vergebührende Internetknoten usw. Es ist auch nicht notwendig, daß das erste Telekommunikationsnetz 3 und das zweite Telekommunikationsnetz 2 verschiedene Netze sind: Beide Netze können z.B. ein und dasselbe Telephonnetz oder das Internet sein.

Ein Konzept der vorliegenden Erfindung ist, daß die Ticketausgabe einerseits und die Ticketverwendung andererseits zeitlich versetzt über gesonderte Kommunikationskanäle erfolgen, sodaß eine Anonymisierung der elektronischen Tickets 15 möglich ist. Die Linie 52 in Fig. 1A stellt eine Anonymisierungsschnittstelle des Systems dar: Das Verrechnungszentrum CC erhält über die Schnittstelle 52 keine Information über den Benutzer USR; gegebenenfalls wird zu diesem Zweck die Funktion "Anruferidentifizierung" (caller identification) des Telephonnetzes 2 ausgeschaltet. Es ist klar, daß diese Anonymisierung optional ist.

## Patentansprüche

1. Computersystem (1) zur Übertragung von Finanzwerten von Benutzern (USR) zu Empfängern (CP) in einem Datennetz (3), welche Benutzer (USR) auch Zugang zu einem Telephonnetz (2) haben, das von den Benutzern (USR) Gebühren für Telephonanrufe einhebt, **gekennzeichnet durch** die Kombination aus:
einer Datenbank (13) zum Speichern elektronischer Tickets (15),
- wobei jedes Ticket (15) zumindest eine Ticketidentifikation (N°) enthält, die für jedes Ticket in der Datenbank einzigartig ist und einen Finanzwert darstellt;
einer Anrufbeantwortungseinheit (12), die an die Datenbank (13) angeschlossen ist, zum Anschluß an das Telephonnetz (2) ausgebildet ist und eine Sprachausgabeeinheit (19) enthält und
- einen über das Telephonnetz (2) empfangenen Telephonanruf eines Benutzers (USR) beantwortet,
- in Zusammenwirken mit der Datenbank (13) ein neues elektronisches Ticket (15) ermittelt und
- mit Hilfe der Sprachausgabeeinheit (19) zumindest die Ticketidentifikation (N°) dieses elektronischen Tikkets (15) an den Benutzer (USR) sprachausgibt; und
einem Serverrechner (14, SRV), der an die Datenbank (13) angeschlossen und zum Anschluß an das Datennetz (3) ausgebildet ist, welcher Serverrechner (14, SRV)
- eine Finanzwertübertragungsanforderung über das Datennetz (3) empfängt, die zumindest eine Ticketidentifikation (N°) eines der genannten elektronischen Tickets (15) und eine Empfängeridentifikation (p2) eines der genannten Empfänger (CP) umfaßt,
- das **durch** die Ticketidentifikation (N°) referenzierte Ticket (15) in der Datenbank (13) aufsucht und
- eine Eigentümerbeziehung zwischen zumindest einem Teil des genannten Tickets (15) und dem **durch** die Empfängeridentifikation (p2) referenzierten Empfänger (CP) in der Datenbank (13) errichtet;
wobei der Finanzwert ($) eines neuen elektronischen Tikkets (15) von einer Schätzung der für den Telephonanruf vom Telephonnetz (2) eingehobenen Gebühr abhängt.

2. Computersystem nach Anspruch 1, **dadurch gekennzeichnet, daß** die Anrufbeantwortungseinheit (12) die genannte Schätzung anhand einer Messung der Dauer (Δt) des Telephonanrufes durchführt.

3. Computersystem nach Anspruch 2, **dadurch gekennzeichnet, daß** die Anrufbeantwortungseinheit (12) den von der Dauer des Telephonanrufes abhängigen Finanzwert ($) (Δt) fortlaufend sprachausgibt.

4. Computersystem nach Anspruch 1, **dadurch gekennzeichnet, daß** die Anrufbeantwortungseinheit (12) die genannte Schätzung anhand einer Erkennung der vom Benutzer (USR) für den Telephonanruf gewählten Rufnummer durchführt.

5. Computersystem nach Anspruch 1, **dadurch gekennzeichnet, daß** die Anrufbeantwortungseinheit (12) den Finanzwert ($) eines neuen elektronischen Tickets (15) festlegt und einen Auftrag zur Einhebung einer von diesem Finanzwert abhängigen Gebühr an das Telephonnetz (2) sendet.

6. Computersystem nach Anspruch 5, **dadurch gekennzeichnet, daß** die Anrufbeantwortungseinheit (12) den Finanzwert ($) des elektronischen Tickets (15) sprachausgibt.

7. Computersystem nach einem der Ansprüche 1 bis 6, **dadurch gekennzeichnet, daß** das elektronische Ticket (15) eine Angabe über die ungefähre Uhrzeit (t) seiner Sprachausgabe an den Benutzer (USR) enthält.

8. Computersystem nach einem der Ansprüche 1 bis 7, **dadurch gekennzeichnet, daß** die Anrufbeantwortungseinheit (12) den Telephonanruf nach Ablauf einer vorgegebenen Zeitspanne (Δtₘₐₓ) beendet.

9. Computersystem nach einem der Ansprüche 1 bis 8, **dadurch gekennzeichnet, daß** die Anrufbeantwortungseinheit (12) einen vom Benutzer (USR) während des Telephonanrufes eingegebenen PIN-Code (PIN) entgegennimmt und dem elektronischen Ticket (15) in der Datenbank (13) zuordnet.

10. Computersystem nach Anspruch 9, **dadurch gekennzeichnet, daß** der Serverrechner (14, SRV) die genannte Eigentümerbeziehung nur nach Empfang und Validierung des diesem Ticket zugeordneten PIN-Codes (PIN) errichtet.

11. Computersystem nach nach einem der Ansprüche 1 bis 10, **dadurch gekennzeichnet, daß** die vom Benutzer (USR) für den Telephonanruf gewählte Rufnummer eine Mehrwertdienstnummer ist.

12. Computersystem nach einem der Ansprüche 1 bis 11, **dadurch gekennzeichnet, daß** das genannte Datennetz (3) das Internet ist.

13. Computersystem nach einem der Ansprüche 1 bis 12, **dadurch gekennzeichnet, daß** das Datennetz (3) das Internet ist und der Serverrechner (14, SRV) mit der Finanzwertübertragungsanforderung eine Ziel-URL (p2) empfängt und nach Errichtung der Eigentümerbeziehung den Benutzer (USR) an die Ziel-URL (p2) verweist.

14. Computersystem nach Anspruch 13, **dadurch gekennzeichnet, daß** der Serverrechner (14, SRV) nach Errichtung der Eigentümerbeziehung eine Rückfrage über die erfolgreiche Errichtung erwartet, prüft und bestätigt.

15. Verfahren zur Ausgabe von elektronischen Tickets, die Finanzwerte darstellen, an Benutzer, welche Zugang zu einem Telephonnetz haben, das von den Benutzern Gebühren für Telephonanrufe einhebt, mit den Schritten:
Vorsehen einer Datenbank zum Speichern elektronischer Tikkets, wobei jedes Ticket zumindest eine Ticketidentifikation enthält, die für jedes Ticket in der Datenbank einzigartig ist,
Anschließen einer Anrufbeantwortungseinheit, die eine Sprachausgabeeinheit enthält, an die Datenbank und an das Telephonnetz,
Entgegennehmen eines Telephonanrufes eines Benutzers durch die Anrufbeantwortungseinheit,
Ermitteln, in Zusammenwirken mit der Datenbank, eines neuen elektronischen Tickets,
Sprachausgeben zumindest der Ticketidentifikation dieses elektronischen Tickets an den Benutzer mit Hilfe der Sprachausgabeeinheit,
wobei der Finanzwert eines neuen elektronischen Tickets anhand einer Schätzung der für den Telephonanruf vom Telephonnetz eingehobenen Gebühr festgelegt wird.

16. Verfahren nach Anspruch 15, **dadurch gekennzeichnet, daß** die genannte Schätzung anhand einer Messung der Dauer des Telephonanrufes durchgeführt wird.

17. Verfahren nach Anspruch 16, **dadurch gekennzeichnet, daß** die Anrufbeantwortungseinheit den von der Dauer des Telephonanrufes abhängigen Finanzwert fortlaufend sprachausgibt.

18. Computerprogrammprodukt, implementierend ein Verfahren nach einem der Ansprüche 15 bis 17.

## Claims

1. Computer system (1) for transmitting financial values from users (USR) to recipients (CP) in a data network (3), which users (USR) also having access to a telephone network (2) charging the users (USR) fees for telephone calls, **characterized by** the combination of:
a database (13) for storing electronic tickets (15),
- wherein each ticket (15) includes at least a ticket identification (N°) unique to each ticket in the database and representative of a financial value;
a call answering unit (12) connected to the database (13) and adapted to be connected to the telephone network (2) and including a voice outputting unit (19), and which
- answers a telephone call received from a user (USR) over the telephone network (2),
- ascertains in collaboration with the database (13) a new electronic ticket (15) and
- voice outputs by means of the voice outputting unit (19) to the user (USR) at least the ticket identification (N°) of said electronic ticket (15); and
a server computer (14, SRV) connected to the database (13) and adapted to be connected to the data network (3), which server computer (14, SRV)
- receives over the data network (3) a financial value transmission request including at least a ticket identification (N°) of one of the electronic tickets (15) and a recipient identification (p2) of one of said recipients (CP),
- searches the ticket (15) referenced by the ticket identification (N°) in the database (13), and
- establishes in the database (13) a proprietor relationship between at least a part of said ticket (15) and the recipient (CP) referenced by the recipient identification (p2);
wherein the financial value ($) of a new electronic ticket (15) depends upon an estimate of the fee charged by the telephone network (2) for the telephone call.

2. Computer system according to claim 1, **characterized in that** the call answering unit (12) performs said estimate on the basis of a measurement of the duration (Δt) of the telephone call.

3. Computer system according to claim 2, **characterized in that** the call answering unit (12) continually voice outputs the financial value ($) dependent on the duration (Δt) of the telephone call.

4. Computer system according to claim 1, **characterized in that** the call answering unit (12) performs said estimate upon the basis of a recognition of the telephone number dialled by the user (USR).

5. Computer system according to claim 1, **characterized in that** the call answering unit (12) determines the financial value ($) of a new electronic ticket (15) and sends a request for charging the fee dependent upon this financial value to the telephone network (2).

6. Computer system according to claim 5, **characterized in that** the call answering unit (12) voice outputs the financial value ($) of the electronic ticket (15).

7. Computer system according to one of the claims 1 to 6, **characterized in that** the electronic ticket (15) includes an indication of the approximate time (t) of its voice output to the user (USR).

8. Computer system according to one of the claims 1 to 7, **characterized in that** the call answering unit (12) terminates the telephone call upon expiration of a predetermined interval of time (Δtₘₐₓ).

9. Computer system according to one of the claims 1 to 8, **characterized in that** the call answering unit (12) accepts a PIN code (PIN) entered by the user (USR) during the telephone call and assigns it to the electronic ticket (15) in the database (13).

10. Computer system according to claim 9, **characterized in that** the server computer (14, SRV) establishes said proprietor relationship only after receipt and validation of the PIN code (PIN) assigned to said ticket.

11. Computer system according to one of the claims 1 to 10, **characterized in that** the telephone number dialled by the user (USR) for the telephone call is a value added service number.

12. Computer system according to one of the claims 1 to 11, **characterized in that** said data network (3) is the Internet.

13. Computer system according to one of the claims 1 to 12, **characterized in that** the data network (3) is the Internet and the server computer (14, SRV) receives a target URL (p2) with the financial value transmission request and refers the user (USR) to the target URL (p2) after establishment of the proprietor relationship.

14. Computer system according to claim 13, **characterized in that** the server computer (14, SRV) expects, checks and confirms a confirmation request about the successful establishment.

15. Method of issuing electronic tickets representing financial values to users having access to a telephone network charging the users fees for telephone calls, comprising the steps of:
providing a database for storing electronic tickets, each ticket including at least a ticket identification unique to each ticket in the database,
connecting a call answering unit provided with a voice outputting unit to the database and the telephone network,
answering a telephone call from a user by the call answering unit,
ascertaining, in cooperation with the database, of a new electronic ticket,
voice outputting by the voice outputting unit for the user at least the ticket identification of the electronic ticket,
wherein the financial value of a new electronic ticket is determined on the basis of an estimate of the fee charged by the telephone network for the telephone call.

16. Method according to claim 15, **characterized in that** said estimate is performed on the basis of a measurement of the duration of the telephone call.

17. Method according to claim 16, **characterized in that** the call answering unit continually voice outputs the financial value dependent upon the duration of the telephone call.

18. Computer program product, implementing a method according to one of the claims 15 to 17.

## Revendications

1. Système informatique (1) permettant le transfert de valeurs financières d'utilisateurs (USR) à des récepteurs (CP) dans un réseau de données (3), lesquels utilisateur ont également accès à un réseau téléphonique (2) qui prélève auprès des utilisateurs (USR) des taxes d'appel téléphonique, **caractérisé par** la combinaison :
d'une base de données (13) permettant la mémorisation de tickets électroniques (15),
- chaque ticket comportant au moins une identification de ticket (n°) qui est unique pour chaque ticket dans la base de données et qui représente une valeur financière ;
d'un répondeur (12) qui est raccordé à la base de données (13), qui est conformé pour le raccordement au réseau téléphonique (2) et qui contient une unité de réponse vocale (19) et
- qui répond à un appel téléphonique d'un utilisateur (USR) reçu via le réseau téléphonique (2),
- qui détermine conjointement avec la base de données (13) un nouveau ticket électronique (15) et
- qui délivre vocalement à l'utilisateur (USR) au moins l'identification de ticket (n°) de ce ticket électronique (15) à l'aide du répondeur (19) ; et
d'un ordinateur serveur (14, SRV) qui est raccordé à la base de données (13) et qui est conformé pour le raccordement au réseau de données (3), lequel ordinateur serveur (14, SRV)
- reçoit sur le réseau de données (3) une demande de transfert de valeur financière qui comporte au moins une identification de ticket (n°) de l'un desdits tickets électroniques (15) et une identification de récepteur (p2) de l'un desdits récepteurs (CP),
- recherche le ticket (15), référencé par l'identification de ticket (n°), dans la base de données (13) et
- établit une relation de propriétaire entre au moins une partie dudit ticket (15) et le récepteur (CP), référencé par l'identification de récepteur (p2), dans la base de données (13);
la valeur financière d'un nouveau ticket électronique (15) dépendant d'une estimation de la taxe prélevée pour l'appel téléphonique sur le réseau téléphonique (2).

2. Système informatique selon la revendication 1, **caractérisé en ce que** le répondeur (12) réalise ladite estimation en se référant à une mesure de la durée (Δt) de l'appel téléphonique.

3. Système informatique selon la revendication 2, **caractérisé en ce que** le répondeur (12) délivre vocalement en continu la valeur financière ($) fonction de la durée (Δt) de l'appel téléphonique.

4. Système informatique selon la revendication 1, **caractérisé en ce que** le répondeur (12) réalise ladite estimation en se référant à une identification du numéro d'appel composé par l'utilisateur (USR) pour l'appel téléphonique.

5. Système informatique selon la revendication 1, **caractérisé en ce que** le répondeur (12) détermine la valeur financière ($) d'un nouveau ticket électronique (15) et envoie au réseau téléphonique (2) une ordre de prélever une taxe fonction de cette valeur financière.

6. Système informatique selon la revendication 5, **caractérisé en ce que** le répondeur (12) délivre vocalement la valeur financière ($) du ticket électronique (15).

7. Système informatique selon l'une des revendications 1 à 6, **caractérisé en ce que** le ticket électronique (15) contient une donnée relative à l'heure approximative à laquelle il a été délivré vocalement à l'utilisateur (USR).

8. Système informatique selon l'une des revendications 1 à 7, **caractérisé en ce que** le répondeur (12) met fin à l'appel téléphonique au bout d'un temps prédéterminé (Δtₘₐₓ).

9. Système informatique selon l'une des revendications 1 à 8, **caractérisé en ce que** le répondeur (12) reçoit un code PIN (PIN) de l'utilisateur (USR) pendant l'appel téléphonique et l'associe au ticket électronique (15) dans la base de données (13).

10. Système informatique selon la revendication 9, **caractérisé en ce que** l'ordinateur serveur (14, SRV) établit ladite relation de propriétaire seulement après réception et validation du code PIN (PIN) associé à ce ticket.

11. Système informatique selon l'une des revendications 1 à 10, **caractérisé en ce que** le numéro d'appel composé par l'utilisateur (USR) pour l'appel téléphonique est un numéro de service plurivalent.

12. Système informatique selon l'une des revendications 1 à 11, **caractérisé en ce que** ledit réseau de données (3) est l'Internet.

13. Système informatique selon l'une des revendications 1 à 12, **caractérisé en ce que** le réseau de données (3) est l'Internet et l'ordinateur serveur (14, SRV) reçoit avec la demande de transfert de valeur financière une URL cible (2) et adresse après l'établissement de la relation de propriétaire l'utilisateur à l'URL cible (2).

14. Système informatique selon la revendication 13, **caractérisé en ce que** l'ordinateur serveur (14, SRV) attend, vérifie et confirme après l'établissement de la relation de propriétaire un renvoi d'appel sur l'établissement fructueux.

15. Procédé de délivrance de tickets électroniques, qui représentent des valeurs financières, à des utilisateurs qui ont accès à un réseau téléphonique qui prélève auprès des utilisateurs des taxes d'appel téléphonique, lequel procédé comporte les étapes consistant à :
prévoir une base de données permettant de mémoriser des tickets électroniques, chaque ticket comportant au moins une identification de ticket qui est unique pour chaque ticket dans la base de données,
raccorder un répondeur, qui contient une unité de réponse vocale, à la base de données et au réseau téléphonique,
recevoir un appel téléphonique d'utilisateur via le répondeur,
déterminer conjointement avec la base de données un nouveau ticket électronique,
délivrer vocalement au moins l'identification de ticket de ce ticket électronique à l'utilisateur à l'aide de l'unité de réponse vocale,
la valeur financière d'un nouveau ticket électronique étant déterminée en se référant à une estimation de la taxe prélevée pour l'appel téléphonique sur le réseau téléphonique.

16. Procédé selon la revendication 15, **caractérisé en ce que** ladite estimation est réalisée en se référant à une mesure de la durée de l'appel téléphonique.

17. Procédé selon la revendication 16, **caractérisé en ce que** le répondeur délivre vocalement en continu la valeur financière fonction de la durée de l'appel téléphonique.

18. Logiciel mettant en oeuvre un procédé selon l'une des revendications 15 à 17.
